# FASCICULE DE BREVET EUROPEEN

(11) **EP 2 294 647 B1**
(45) Date de publication et mention de la délivrance du brevet: **04.04.2012**
(21) Numéro de dépôt: 09769144.8
(22) Date de dépôt: 15.06.2009
(51) Int. Cl.: H01M 8/02, H01M 8/04

(54) **CULASSE DE DISTRIBUTION D'UNE PILE A COMBUSTIBLE**
VERTEILERKOPF FÜR EINE BRENNSTOFFZELLE
DELIVERY HEAD FOR A FUEL CELL

(30) Priorité: 27.06.2008 FR 0803637
(43) Date de publication de la demande: 16.03.2011
(73) Titulaire: Commissariat à l'Énergie Atomique et aux Énergies Alternatives, 75015 Paris (FR); PEUGEOT CITROËN AUTOMOBILES S.A., 78140 Velizy Villacoublay (FR)
(72) Inventeur: GARNIT, Sadok, F-75020 Paris (FR); ROY, Francis, F-91940 Les Ulis (FR); JONCQUET, Guillaume, F-75015 Paris (FR); POIROT CROUVEZIER, Jean-Philippe, F-38450 St Georges De Commiers (FR)
(74) Mandataire: Lucas, Laurent Jacques
(86) Numéro de dépôt international: PCT/EP2009/057385
(87) Numéro de publication internationale: WO 2009/156295

(56) Documents cités:
- WO-A-2007/010372
- FR-A- 2 892 234
- JP-A- 2003 178 791
- JP-A- 2006 172 953
- JP-A- 2007 265 799
- JP-A- 2007 273 413

## Description

L'invention concerne une culasse de distribution de fluides pour une cellule électrochimique. Elle concerne également une pile à combustible munie d'une telle culasse de distribution de fluides.

Les cellules électrochimiques sont des dispositifs de conversion d'énergie. Ces dispositifs sont généralement classés en fonction du sens de la conversion d'énergie. Les dispositifs produisant de l'énergie chimique à partir d'énergie électrique sont appelés cellules électrolytiques, alors que les dispositifs produisant de l'énergie électrique à partir d'énergie chimique sont appelés piles à combustible ou batterie.

Une pile à combustible permet la production d'électricité grâce à deux réactions chimiques couplées : l'oxydation d'un combustible réducteur sur une première électrode, appelée anode, et la réduction d'un oxydant sur une seconde électrode, appelée cathode. A ce jour, on utilise couramment l'hydrogène comme combustible et l'oxygène contenu dans l'air comme oxydant.

Une pile à combustible trouve une utilité particulière dans le domaine du transport qui, jusqu'à présent, utilise essentiellement de l'énergie fossile principalement issue du pétrole. L'utilisation de cette énergie produit une quantité importante de dioxyde de carbone contribuant à l'augmentation de l'effet de serre au niveau planétaire. D'autres polluants, tels que des particules ou des oxydes d'azote, sont également produits par l'utilisation de carburants issus du pétrole.

Le principal avantage de l'utilisation d'une pile à combustible utilisant comme gaz d'alimentation de l'hydrogène et de l'oxygène, est que le seul produit des réactions chimiques d'oxydation et de réduction est de l'eau.

Parmi les différents types de pile à combustible, on distingue la pile à combustible à membrane échangeuse de protons, également connue sous le terme de pile à combustible à membrane électrolyte polymère. Une telle pile est constituée d'une cellule élémentaire ou d'un empilement de cellules élémentaires intercalées entre une plaque terminale formant l'anode et une plaque terminale formant la cathode.

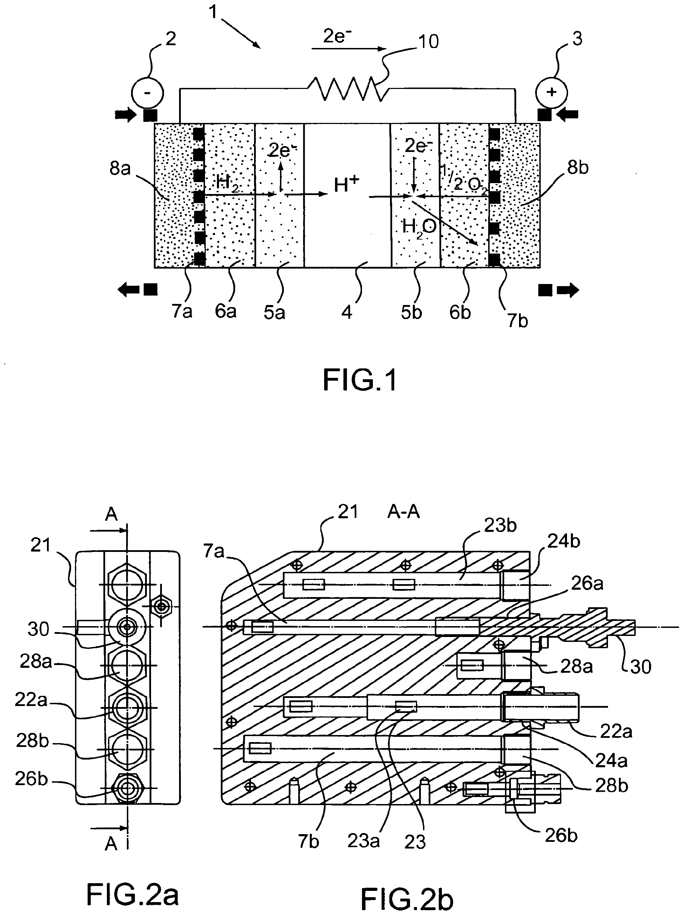

La figure 1 représente schématiquement une pile à combustible à membrane échangeuse de protons comprenant une seule cellule élémentaire 1 intercalée entre une anode 2 et une cathode 3. La cellule élémentaire 1 comprend une membrane électrolyte polymère 4, appelée membrane 4, intercalée entre deux couches actives 5a et 5b, par exemple du carbone poreux. Chaque couche active 5a, 5b est en contact avec une couche de diffusion 6a ou 6b respectivement, par exemple un substrat en papier ou un tissu de carbone. Les couches de diffusion 6a et 6b permettent de diffuser les gaz d'alimentation provenant de lignes de distribution 7a et 7b vers les couches actives 5a et 5b respectivement. Les lignes de distribution 7a et 7b sont par exemple en partie ménagées dans des plaques bipolaires 8a et 8b. Dans cette figure, les plaques bipolaires 8a et 8b sont directement en contact avec l'anode 2 et la cathode 3. Bien entendu, dans le cas d'un empilement de cellules élémentaires 1, une plaque bipolaire 8b d'une première cellule élémentaire vient en contact avec une plaque bipolaire 8a d'une seconde cellule élémentaire, et ainsi de suite.

Dans une pile à combustible à membrane échangeuse de protons utilisant comme gaz d'alimentation de l'hydrogène et de l'oxygène, l'hydrogène est introduit sous forme gazeuse au niveau de l'anode 2, par exemple par l'intermédiaire de la ligne de distribution 7a, tandis que l'oxygène est introduit, également sous forme gazeuse, au niveau de la cathode 3, par exemple par l'intermédiaire de la ligne de distribution 7b. En présence d'un catalyseur, comme par exemple du platine contenu dans la couche active 5a, l'hydrogène libère des électrons e- selon la réaction d'oxydation suivante :

H₂ → 2 H⁺ + 2 e⁻.

Les électrons e- libérés dans la couche active 5a vont rejoindre la couche active 5b au travers d'un circuit électrique 10 utilisant l'énergie électrique produite par la pile à combustible, et les protons H⁺, libérés lors de cette première réaction, vont migrer vers la couche active 5b en traversant la membrane 4. Au niveau de la couche active 5b, les protons H⁺ vont se combiner à l'oxygène O₂ et aux électrons e⁻, toujours en présence d'un catalyseur, selon la réaction de réduction suivante :

2H⁺ + ½O₂ + 2e⁻ → H₂O.

De façon globale, il se produit la réaction d'oxydoréduction suivante :

H₂ + ½ O₂ → H₂O.

Pour un meilleur rendement énergétique, les réactions d'oxydation et de réduction doivent se produire dans une certaine plage de température et de pression. Pour assurer cette température adéquate de fonctionnement, un liquide caloporteur maintenu à une température comprise dans cette plage de température circule à l'intérieur d'une conduite passant autour ou au travers des cellules élémentaires 1.

Le fonctionnement d'une pile à combustible nécessite de nombreux échanges fluidiques avec des dispositifs périphériques à la pile à combustible. En particulier, le liquide caloporteur nécessite de passer à travers un dispositif permettant de maintenir sa température. De même, les lignes de distribution 7a et 7b nécessitent d'être reliées à des circuits d'alimentation en hydrogène et en oxygène. Dans un souci de réduction d'encombrement, les lignes de distribution des fluides peuvent déboucher au niveau d'une seule et même pièce, appelée culasse de distribution de fluides ou, plus simplement, culasse de distribution. JP 2 003 178 791 décrit une culasse de distribution de fluides d'une pile à combustible.

Les figures 2a et 2b représentent un exemple de culasse de distribution 21 vue respectivement de face et en coupe.

La culasse de distribution 21 comporte un raccord d'entrée 22a relié à la conduite 23 du liquide caloporteur au niveau d'un orifice d'entrée 24a. La conduite 23 comporte une portion de conduite 23a intégrée à la culasse de distribution 21. La conduite 23 se prolonge à l'intérieur ou autour de la ou des cellules élémentaires 1 et se termine par une portion de conduite 23b, par exemple intégrée à la culasse de distribution 21. Cette portion de conduite 23b comprend un orifice de sortie 24b pouvant accueillir un raccord de sortie, non représenté. La culasse de distribution 21 comprend également un orifice d'entrée 26a et un orifice de sortie 26b permettant de relier la ligne de distribution 7a à un circuit extérieur tel qu'un circuit d'alimentation en hydrogène, ainsi qu'un orifice d'entrée 28a et un orifice de sortie 28b permettant de relier la ligne de distribution 7b à un circuit extérieur tel qu'un circuit d'alimentation en oxygène.

Pour un bon fonctionnement de la pile à combustible, la membrane 4 doit contenir de l'eau afin de permettre le transfert des protons H⁺ de la couche active 5a côté anode 2 vers la couche active 5b côté cathode 3. La membrane 4 est perméable à l'eau. Par conséquent, il se produit un transfert d'eau de la cathode 3 vers l'anode 2 par un mécanisme de diffusion dû à la différence de concentration en eau de chaque côté de la membrane 4. Ce mécanisme de diffusion d'eau cohabite avec une diffusion d'autres espèces telles que l'azote. Du fait de la température de la pile à combustible, l'eau en sortie de la ligne de distribution 7a est essentiellement présente sous forme gazeuse. Afin d'optimiser le rendement de la pile et accroître sa durée de vie, cette eau ainsi que les autres espèces telles que l'azote sont réinjectées en entrée de la ligne de distribution 7a avec l'hydrogène. La circulation d'hydrogène et la réinjection de l'eau et de l'azote peut être assurée par un circuit extérieur à la pile à combustible comprenant par exemple une pompe ou un éjecteur 30, représenté aux figures 2a et 2b. La quantité d'eau présente sous forme liquide doit cependant être précisément contrôlée. En effet, une trop grande quantité d'eau dans la cellule élémentaire 1 empêche l'alimentation en hydrogène et en oxygène des couches actives 5a et 5b, entraînant une inversion de la tension aux bornes de la pile à combustible et donc un phénomène d'électrolyse de l'eau. Dans certains cas, par exemple en cas de fort appel de courant, la pile à combustible peut être détruite. Afin de limiter les risques d'injection d'eau sous forme liquide en entrée de la ligne de distribution 7a, il est possible de placer un séparateur de phase conventionnel dans le circuit d'alimentation en hydrogène en amont de la ligne de distribution 7a. Cependant, un tel séparateur de phase est généralement encombrant. Cet encombrement est gênant pour une utilisation embarquée. Par ailleurs, un séparateur de phase placé en amont de la ligne de distribution 7a ne permet pas de contrôler la quantité d'eau présente sous forme liquide à l'intérieur de la cellule élémentaire 1 du fait de la non maîtrise de la condensation d'eau dans la canalisation reliant le séparateur à l'orifice d'entrée 26a.

Un but de l'invention est notamment de pallier tout ou partie des inconvénients précités en proposant un dispositif de faible encombrement et permettant un contrôle de la quantité d'eau à l'intérieur des cellules élémentaires 1. A cet effet, l'invention a pour objet une culasse de distribution de fluides comportant une ligne de distribution d'un fluide vers une partie active d'une cellule électrochimique, selon la revendication 1.

L'invention a également pour objet une pile à combustible comportant une cellule élémentaire dans laquelle se produit une réaction d'oxydoréduction permettant de générer un courant électrique entre deux électrodes de la pile à combustible, caractérisée en ce qu'elle comporte une culasse de distribution selon l'invention.

L'invention a notamment pour avantage qu'elle permet de contrôler la quantité d'eau présente sous forme liquide dans la pile à combustible avec un minimum d'encombrement. Elle permet en outre de minimiser la longueur du circuit d'alimentation en hydrogène et, par voie de conséquence, de limiter le phénomène de condensation. L'eau sous forme gazeuse se trouve donc préservée pour être réinjectée en entrée de la ligne de distribution d'hydrogène, garantissant une augmentation de la durée de vie de la pile à combustible.

L'invention sera mieux comprise et d'autres avantages apparaîtront à la lecture de la description détaillée d'un mode de réalisation donné à titre d'exemple, description faite en regard de dessins annexés qui représentent :
- la figure 1, une pile à combustible à membrane échangeuse de protons et son principe de fonctionnement ;
- les figures 2a et 2b, un exemple de culasse de distribution de fluides pour pile à combustible ;
- les figures 3 et 4, une partie de la culasse de distribution de fluides concernée par l'invention.

Pour la suite de la description, on considérera une pile à combustible, par exemple une pile à combustible à membrane échangeuse de protons, utilisant comme gaz d'alimentation de l'hydrogène et de l'oxygène. Cependant, il est possible d'utiliser d'autres gaz d'alimentation sans sortir du cadre de l'invention. De plus, l'invention s'applique tout aussi bien à d'autres types de piles à combustible et, de façon générale, à toute cellule électrochimique.

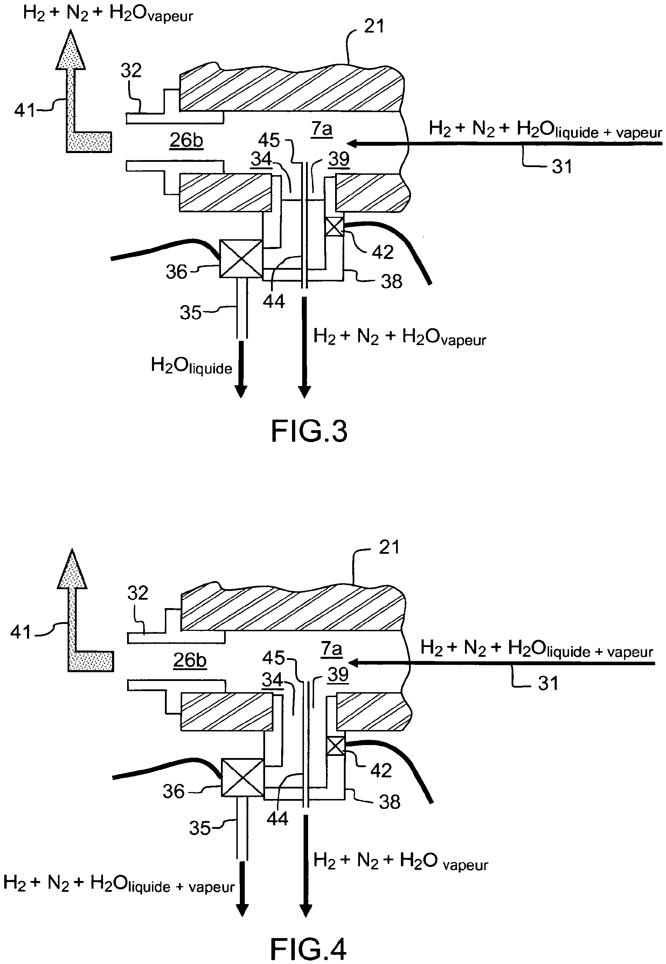

Les figures 3 et 4 représentent une vue en coupe d'une partie de la culasse de distribution de fluides 21. La culasse de distribution 21 comprend l'orifice de sortie 26b de la ligne de distribution 7a. La ligne de distribution 7a est en communication avec une partie active de la pile à combustible, en l'occurrence la couche de diffusion 6a du côté de l'anode 2. Par conséquent, un mélange de fluides 31 contenant de l'hydrogène H₂ non consommé par la réaction d'oxydation, de l'azote N₂ et de l'eau sous forme liquide et gazeuse H₂O _{liquide + vapeur} arrive de la partie active de la pile à combustible et se dirige vers l'orifice de sortie 26b. Un raccord 32 permet de raccorder la ligne de distribution 7a à un circuit extérieur tel qu'un circuit d'alimentation en hydrogène, non représenté. Selon l'invention, la ligne de distribution 7a comprend une cavité 34 en communication avec un conduit d'évacuation 35 par l'intermédiaire d'une électrovanne 36. La cavité 34 est par exemple réalisée dans la forme de la culasse de distribution 21 ou, comme représenté aux figures 3 et 4, est réalisée par un conduit 38 débouchant dans la ligne de distribution 7a par un orifice 39 réalisé dans la culasse de distribution 21. Ce dernier mode de réalisation permet d'appliquer l'invention à des culasses de distribution 21 pour lesquelles la cavité 34 n'était pas prévue à l'origine. L'invention permet, lors du passage d'un liquide au niveau de la cavité 34, le guidage de ce liquide dans la cavité 34. Lorsque l'électrovanne 36 est fermée, le liquide, par exemple de l'eau sous forme liquide H₂O _{liquide}, est stocké dans la cavité 34 et, lorsque l'électrovanne 36 est ouverte, le liquide est évacué vers le conduit d'évacuation 35.

Selon une forme particulière de réalisation, la cavité 34 est formée au voisinage de l'orifice de sortie 26b. Cette forme de réalisation permet de séparer l'eau présente sous forme liquide H₂O _{liquide} du reste du mélange de fluides 31, notamment l'hydrogène H₂, l'azote N₂ et l'eau H₂O sous forme gazeuse H₂O ᵥₐₚₑᵤᵣ. Le reste du mélange de fluides 31 est appelé mélange gazeux 41. Selon cette forme de réalisation, lors du passage du mélange de fluides 31 au niveau de la cavité 34, l'eau sous forme liquide H₂O _{liquide} est guidée dans la cavité 34, tandis que le mélange gazeux 41 se dirige vers l'orifice de sortie 26b.

Selon une forme particulière de réalisation, la cavité 34 est formée au niveau d'un point bas de la ligne de distribution 7a. Par point bas, on entend le point de la ligne de distribution 7a où s'accumulerait naturellement un liquide du fait de la gravité terrestre. Cette forme de réalisation permet de collecter dans la cavité 34 l'ensemble de l'eau sous forme liquide H₂O _{liquide} présente dans la ligne de distribution 7a. Par conséquent, la quantité d'eau liquide H₂O _{liquide} dans la ligne de distribution 7a, et donc dans la ou les cellules élémentaires 1, peut être contrôlée précisément en surveillant la quantité d'eau présente dans la cavité 34.

Selon une forme particulière de réalisation, l'électrovanne 36 est reliée à des moyens pour commander son ouverture. Ces moyens comprennent par exemple un calculateur indépendant ou un système de gestion du fonctionnement de la pile à combustible. Les moyens pour commander l'ouverture de l'électrovanne 36 peuvent également comporter un capteur 42 de niveau de liquide situé dans la ligne de distribution 7a, par exemple relié au calculateur. Selon cette forme de réalisation, l'ouverture de l'électrovanne 36 peut être contrôlée en fonction d'un niveau de liquide dans la ligne de distribution 7a. L'électrovanne 36 est par exemple ouverte lorsque le capteur 42 de liquide détecte la présence de liquide et fermée lorsque le capteur 42 de liquide ne détecte pas de liquide.

Dans un mode de réalisation, représenté aux figures 3 et 4, le capteur 42 de niveau de liquide est situé dans la cavité 34, au-dessus de l'électrovanne 36. En d'autres termes, le capteur 42 de niveau de liquide et l'électrovanne 36 sont agencés de telle manière qu'un liquide puisse s'accumuler par gravité dans la cavité 34 avant d'atteindre le capteur 42 de niveau de liquide. Ce mode de réalisation permet de conserver un minimum d'eau sous forme liquide H₂O _{liquide} au fond de la cavité 34 tout en évitant un débordement de la cavité 34. Ainsi, le mélange gazeux 41 ne risque pas d'être évacué par le conduit d'évacuation 35 et l'eau liquide H₂O _{liquide} est évacuée de la ligne de distribution 7a.

Dans un mode de réalisation, les moyens pour commander l'ouverture de l'électrovanne 36 comportent un capteur de pression situé dans la ligne de distribution 7a. Ce capteur de pression peut être relié au calculateur ou au système de gestion du fonctionnement de la pile à combustible. Le capteur de pression permet de fournir une information sur la pression régnant à l'intérieur de la ligne de distribution 7a. Cette pression peut également être prise en compte pour le pilotage de l'ouverture de l'électrovanne 36. En particulier, l'électrovanne 36 peut être ouverte lorsque la pression passe au-dessus d'un seuil prédéterminé. Toute l'eau liquide H₂O _{liquide} peut alors être évacuée par le conduit d'évacuation 35. L'ouverture de l'électrovanne 36 permet également d'évacuer tout ou partie du mélange de fluides 31, réduisant ainsi la pression dans la ligne de distribution 7a. Cette phase de fonctionnement est représentée à la figure 4. L'électrovanne 36 peut alors être refermée soit lorsque la pression repasse sous une certaine valeur, soit après une certaine durée. La combinaison du capteur de pression, de l'électrovanne 36 et du canal d'évacuation 35 assure de fait une fonction de clapet de surpression.

Selon une forme particulière de réalisation, la culasse de distribution 21 comprend un tube 44 permettant l'évacuation de gaz de la ligne de distribution 7a. Le tube 44 peut traverser la cavité 34 afin d'obtenir un dispositif compact. En particulier, les gaz évacués peuvent être l'hydrogène H₂, l'azote N₂ et l'eau sous forme gazeuse H₂O ᵥₐₚₑᵤᵣ du mélange de fluides 31. Le tube 44 présente par exemple un diamètre intérieur compris entre 0,1 et 0,7 mm. Le tube 44 permet de prélever de façon périodique ou continue une certaine quantité de gaz de la ligne de distribution 7a. Ce prélèvement de gaz limite notamment l'augmentation de concentration en azote N₂ dans le circuit d'alimentation en hydrogène H₂, régulant ainsi le rapport entre l'hydrogène H₂ et les autres gaz présents en entrée de la ligne de distribution 7a.

Dans un mode de réalisation, une extrémité 45 du tube 44 est située au-dessus du capteur 42 de niveau de liquide. Le gaz présent dans la ligne de distribution 7a peut ainsi être prélevé sans évacuer d'eau liquide H₂O _{liquide}.

En résumé, l'invention permet d'assurer plusieurs fonctions avec un minimum d'éléments et dans un encombrement réduit. L'invention assure notamment une fonction d'évacuation de l'eau liquide H₂O _{liquide}, une fonction de clapet de surpression et une fonction de régulation de la quantité d'azote N₂.

## Revendications

1. Culasse de distribution de fluides (31, 41) pour une cellule électrochimique, comportant une ligne de distribution (7a) d'un fluide (31, 41) vers une partie active (6a) de la cellule électrochimique, la ligne de distribution (7a) comprenant une cavité (34) capable de recueillir du liquide, en communication avec un conduit d'évacuation (35) par l'intermédiaire d'une électrovanne (36), la culasse de distribution (21) étant **caractérisée en ce qu'**elle comprend un tube (44) permettant l'évacuation de gaz (H₂, N₂, H₂O ᵥₐₚₑᵤᵣ) de la ligne de distribution (7a) et **en ce que** le tube (44) traverse la cavité (34).

2. Culasse de distribution selon la revendication 1, **caractérisée en ce qu'**elle comprend un orifice de sortie (26b) permettant de relier la ligne de distribution (7a) à un circuit extérieur et **en ce que** la cavité (34) est formée au voisinage de l'orifice de sortie (26b).

3. Culasse de distribution selon l'une des revendications 1 ou 2, **caractérisée en ce que** la cavité (34) est formée au niveau d'un point bas de la ligne de distribution (7a).

4. Culasse de distribution selon l'une des revendications précédentes, **caractérisée en ce que** l'électrovanne (36) est reliée à des moyens (42) pour commander son ouverture comportant un capteur (42) de niveau de liquide situé dans la ligne de distribution (7a).

5. Culasse de distribution selon la revendication 4, **caractérisée en ce que** le capteur (42) de niveau de liquide est situé dans la cavité (34) au-dessus de l'électrovanne (36).

6. Culasse de distribution selon l'une des revendications 4 ou 5, **caractérisée en ce que** les moyens (42) pour commander l'ouverture de l'électrovanne (36) comportent un capteur de pression situé dans la ligne de distribution (7a).

7. Culasse de distribution selon la revendication 4, **caractérisée en ce qu'**une extrémité (45) du tube (44) est située au-dessus du capteur (42) de niveau de liquide.

8. Culasse de distribution selon l'une des revendications précédentes, **caractérisée en ce que** la cavité (34) est réalisée par un conduit (38) débouchant dans la ligne de distribution (7a) par un orifice (39) réalisé dans la culasse de distribution (21).

9. Pile à combustible comportant au moins une cellule élémentaire (1) dans laquelle se produit une réaction d'oxydoréduction permettant de générer un courant électrique entre deux électrodes (2, 3) de la pile à combustible, **caractérisée en ce qu'**elle comporte une culasse de distribution (21) selon l'une des revendications précédentes.

## Claims

1. A fluid (31, 41) delivery head for an electrochemical cell, comprising a line (7a) for delivering a fluid (31, 41) to an active part (6a) of the electrochemical cell, the delivery line (7a) comprising a cavity (34) capable of receiving liquid, in communication with a discharge pipe (35) via a solenoid valve (36), the delivery head (21) being **characterized in that** it comprises a tube (44) for discharging gases (H₂, N₂, H₂O ᵥₐₚₒᵣ) from the delivery line (7a) and **in that** the tube (44) crosses the cavity (34).

2. The delivery head as claimed in claim 1, **characterized in that** it comprises an outlet orifice (26b) for connecting the delivery line (7a) to an external circuit and **in that** the cavity (34) is formed in the region of the outlet orifice (26b).

3. The delivery head as claimed in either of claims 1 and 2, **characterized in that** the cavity (34) is formed at a bottom point of the delivery line (7a).

4. The delivery head as claimed in one of the preceding claims, **characterized in that** the solenoid valve (36) is connected to means (42) for controlling its opening, comprising a liquid level sensor (42) located in the delivery line (7a).

5. The delivery head as claimed in claim 4, **characterized in that** the liquid level sensor (42) is located in the cavity (34) above the solenoid valve (36).

6. The delivery head as claimed in either of claims 4 and 5, **characterized in that** the means (42) for controlling the opening of the solenoid valve (36) comprise a pressure sensor located in the delivery line (7a).

7. The delivery head as claimed in claim 4, **characterized in that** one end (45) of the tube (44) is located above the liquid level sensor (42).

8. The delivery head as claimed in one of the preceding claims, **characterized in that** the cavity (34) is made by a pipe (38) opening into the delivery line (7a) via an orifice (39) made in the delivery head (21).

9. A fuel cell comprising at least one elemental cell (1) in which takes place a redox reaction for generating an electrical current between two electrodes (2, 3) of the fuel cell, **characterized in that** it comprises a delivery head (21) as claimed in one of the preceding claims.

## Patentansprüche

1. Verteilerkopf für Fluide (31, 41) für eine elektrochemische Zelle, die eine Verteilungsleitung (7a) für ein Fluid (31, 41) zu einem aktiven Teil (6a) der elektrochemischen Zelle umfasst, wobei die Verteilungsleitung (7a) einen Hohlraum (34) zum Sammeln von Flüssigkeit umfasst, der mit einem Abflusskanal (35) über ein Elektroventeil (36) in Verbindung ist, wobei der Verteilerkopf (21) **dadurch gekennzeichnet ist, dass** er eine Röhre (44) umfasst, durch die Gas (H₂, N₂, H₂Oᵥₐₚₑᵤᵣ) aus der Verteilungsleitung (7a) abfließen kann, und dadurch, dass die Röhre (44) den Hohlraum (34) durchquert.

2. Verteilerkopf nach Anspruch 1, **dadurch gekennzeichnet, dass** er einen Ablauf (26b) umfasst, über den die Verteilungsleitung (7a) mit einem äußeren Kreislauf verbunden werden kann, und dadurch, dass der Hohlraum (34) in der Nähe des Ablaufs (26b) ausgebildet ist.

3. Verteilerkopf nach Anspruch 1 oder 2, **dadurch gekennzeichnet, dass** der Hohlraum (34) in der Höhe eines unteren Punkts der Verteilungsleitung (7a) ausgebildet ist.

4. Verteilerkopf nach einem der vorherigen Ansprüche, **dadurch gekennzeichnet, dass** das Elektroventil (36) mit Mitteln (42) zum Steuern seiner Öffnung verbunden ist, die einen Sensor (42) für den Stand der in der Verteilungsleitung (7a) befindlichen Flüssigkeit umfasst.

5. Verteilerkopf nach Anspruch 4, **dadurch gekennzeichnet, dass** sich der Flüssigkeitsstandssensor (42) in dem Hohlraum (34) über dem Elektroventil (36) befindet.

6. Verteilerkopf nach Anspruch 4 oder 5, **dadurch gekennzeichnet, dass** die Mittel (42) zum Steuern der Öffnung des Elektroventils (36) einen Drucksensor umfassen, der sich in der Verteilungsleitung (7a) befindet.

7. Verteilerkopf nach Anspruch 4, **dadurch gekennzeichnet, dass** sich ein Ende (45) der Röhre (44) über dem Flüssigkeitsstandssensor (42) befindet.

8. Verteilerkopf nach einem der vorherigen Ansprüche, **dadurch gekennzeichnet, dass** der Hohlraum (34) durch einen Kanal (38) realisiert wird, der durch ein Loch (39) im Verteilerkopf (21) in die Verteilungsleitung (21) mündet.

9. Brennstoffzelle, die wenigstens eine Elementarzelle (1) umfasst, in der eine Oxidationsreaktion erfolgt, die es zulässt, einen elektrischen Strom zwischen zwei Elektroden (2, 3) der Brennstoffzelle zu erzeugen, **dadurch gekennzeichnet, dass** sie einen Verteilerkopf (21) nach einem der vorherigen Ansprüche umfasst.
